# EUROPEAN PATENT SPECIFICATION

(11) **EP 4 410 472 B1**
(45) Date of publication and mention of the grant of the patent: **29.04.2026**
(21) Application number: 23382101.6
(22) Date of filing: 03.02.2023
(51) Int. Cl.: B23K 101/16, B23K 103/00, B23K 26/082, B23K 26/08, B23K 26/16, B23K 26/20, B23K 26/21, B23K 26/352

(54) **LASER BEAM SYSTEM FOR CONTINUOUS TREATMENT OF A LAMINAR MATERIAL AT INCREASING SPEEDS AND CONSTANT QUALITY AND ADJUSTING METHOD THEREOF**
LASERSTRAHLSYSTEM ZUR KONTINUIERLICHEN BEHANDLUNG EINES LAMINAREN MATERIALS BEI HOHEN GESCHWINDIGKEITEN UND KONSTANTER QUALITÄT UND EINSTELLUNGSVERFAHREN DAFÜR
SYSTÈME DE FAISCEAU LASER POUR LE TRAITEMENT CONTINU D'UN MATÉRIAU LAMINAIRE À DES VITESSES ET UNE QUALITÉ CONSTANTES ACCRUES ET SON PROCÉDÉ DE RÉGLAGE

(43) Date of publication of application: 07.08.2024
(73) Proprietor: Comexi Group Industries, S.A.U, 17457 Riudellots de la Selva (Girona) (ES)
(72) Inventor: PRAT GIL, Jordi, 17002 Girona (ES); ARGILÉS LLORENS, Jordi, 17190 Salt (ES)
(74) Representative: Torner, Juncosa I Associats, SL

(56) References cited:
- US-A- 4 568 815
- US-A1- 2003 047 695

## Description

### Field of the art

This document refers to laser beam system for continuous treatment of a laminar material at increasing speeds and constant quality and adjusting method thereof (see, for example, US 4 568 815, on which the preamble of the independent claims is based).

The laser beam system can alter the laminar material applying a treatment according to predefined treatment parameters by locally melting, burning, sublimating, denaturing and/or darkening different points of the laminar material following to a predefined pattern. Said treatment can produce, for example, micro-holes, weakened or cut lines in the laminar material, or even printing.

The treated laminar material can be used for the manufacture of packaging, containers and wrappings.

The laser beam system can be integrated in a laminar material continuous treatment machine such as a laminating machine, a winding machine or a printing machine adapted for continuously treating a web of laminar material, preferably a plastic laminar material.

In this type of machines, the web of laminate material moves continuously through its interior in a conveyance direction guided by a conveyor device, typically comprising rollers, to apply different treatments on the laminar material.

The productivity of the laser beam system depends on the speed at which the web moves through its interior, so high speeds are preferred, being necessary a precise control of the treatment applied on the web of laminar material by the laser beam emitted by the laser beam emitter to avoid imperfections or errors in its continuous application at high speed. Typically, the speed of the web increases from an initial treatment velocity, for example 0 m/min or a speed under 20 m/min or under 10 m /min (linear meters of laminate material feed through the treatment machine per minute), to a final treatment velocity, typically above 200 m/min, or above 400 m/min or comprised between 500 m/min and 800 m/min, preferably 700 m/min, so the treatment to be applied to the flexible sheet by the laser beam emitters must also be adapted to these different speeds.

At speeds above 100 or 150 m/min, the accuracy of the treatment performed by the laser beam cannot be guaranteed without additional continuous laser beam adjustment and calibration measures, which is what is proposed in this document.

### State of the art

Laser beam systems for the application of a treatment on a laminar material are known, however the known systems and methods require carrying out calibration tests on the laminar material at the final speed of treatment, consuming a large amount of laminar material in the tests, since the final speed of treatment is usually above 150 m/min or over 200 m/min.

During the calibration tests, the treatment is carried out on the laminar material moving at the final treatment speed using first estimated emission parameters.

The real treatment produced on the sheet material using the estimated emission parameters is analyzed to detect deviations or imperfections, for example by means of an automatic vision system equipped with a camera that obtains images of the treated sheet material and a control device that analyzes said images for the detection of the real treatment parameters obtained. Said real treatment parameters are then compared with the desired treatment parameters.

Based on the result of said comparison, the necessary adjustments of the estimated emission parameters are calculated to correct any deviation or imperfection detected in the treatment.

This sequence of steps can be repeated several times until emission parameters that allow a treatment free of imperfections are obtained.

This known process consumes a large amount of laminar material during said calibration, which entails a high economic and ecological cost.

The present invention solves the above and other problems.

### Brief description of the invention

The present invention concerns to a laser beam system for continuous treatment of a laminar material at increasing speed and constant quality, as defined in claim 9, and to the adjusting method of such laser beam system as described in claim 1.

A laser beam system for continuous treatment of a laminar material is a system comprising: a conveying device adapted to convey a web of laminar material in a convey direction;
at least one laser beam emitter device configured to emit a controlled laser beam towards the web of laminar material; and
a control device controlling the conveying device and the at least one laser beam emitter and with access to a digital memory.

The digital memory will contain at least treatment parameters of a treatment to be applied with a laser beam emitted by each laser beam emitter on the selected laminar material. The treatment parameters will include shape and distribution pattern of the treatment and intensity and/or depth thereof.

It will be understood that the treatment applied by the laser beam is a local melting, burning, sublimating, denature and/or darken of the laminar material following to a predefined pattern.

The digital memory will also contain stored data of the energy required to locally melt, burn, sublimate, denature and/or darken a laminar material equal or similar to the laminar material to be treated and/or stored data of the treatment (melt, burn, sublimate, denature and/or darken) resulting from the application of a laser beam under different laser beam emission parameters on a laminar material equal or similar to the laminar material to be treated.

The proposed method comprises:
selecting a laminar material to be treated and defining treatment parameters of a treatment to be applied with a laser beam emitted by each laser beam emitter on the selected laminar material, the treatment parameters including shape and distribution pattern of the treatment and intensity and/or depth thereof;
calculating initial emission parameters of each laser beam emitter required to obtain a treatment fulfilling the treatment parameters on the selected laminar material moved at an initial treatment velocity, considering at least stored data of which treatment is produced on the selected laminar material by different laser beam emission parameters and/or of the energy required to locally melt and/or burn the laminar material.

According to the above, first a laminar material has to be selected, defining for example its composition size and thickness, and also the treatment parameters of the treatment to be applied on the selected laminar material have to be determined, including the shape of the treatment, its distribution pattern on the laminar material and the intensity and/or depth thereof.

Once the treatment to be applied has been defined, and the laminar material on which such treatment has to be applied has been selected, the initial emission parameters of each laser beam emitter required to obtain the desired treatment on the selected laminar material, when moved at an initial treatment velocity, can be calculated.

The initial treatment velocity can be under 100m/min, more preferably under 20m/min or 10m/min or even 0m/min.

To make this calculation the stored data is used, for example implementing some calculation algorithms. Knowing the energy required to melt, burn, sublimate, denature and/or darken the laminar material, and knowing the intensity of the treatment to be applied at each point, i.e. knowing if the laminar material shall be melt, burn, sublimate, denaturalize and/or darken on each point to be treated, the initial emission parameters of each laser beam emitter can be easily calculated, determining, for example, the energy to be delivered on each point of the laminar material required to produce the desired treatment. The emission time and intensity of the laser beam applied on each point of the laminar material to be treated can be selected to, in combination, deliver the calculated energy required to obtain the desired treatment.

Similar calculation can be made if the stored data contains examples of the treatment obtained on the selected laminar material, or on a laminar material similar to the selected one, when different laser beam emission parameters, including time emission of the laser beam on each point and intensity of the laser beam on each point, are used to treat said laminar material. Once stored data of one or several treatments similar to the treatment to be applied is/are identified, the stored data of the emission parameters used to obtain said treatments can be implemented as the initial emission parameters or modified through calculation to obtain the desired treatment. For example, the stored data can be analyzed to determine a correlation between the energy delivered by the laser beam when different emission parameters are implemented and the treatment obtained, permitting to estimate which will be the treatment resulting from a particular combination of emission parameters, in particular emission time and intensity of the laser beam on each point to be treated.

The stored information related with the treatment obtained on the laminar material contains for example if the laminar material was melt, burn, sublimate, denaturalize and/or darken, on each point, and the intensity or depth of this treatment, which can even produce a perforation of the laminar material.

Once the initial emission parameter is calculated, the present invention proposes to perform the following steps:
calculating velocity adjusted emission parameters of each laser beam emitter adjusting the previously calculated initial emission parameters by a stored dynamic adjustment algorithm configured to modify any given emission parameters in function of the web velocity to maintain constant the treatment parameters of the treatment applied on the laminar material at any velocity within a velocity rank including the initial treatment velocity and a final treatment velocity; and
accelerating the web of the selected flexible laminate from the initial treatment velocity to the final treatment velocity while each laser beam emitter emits a laser beam applying the treatment to the laminar material using the velocity adjusted emission parameters in coordination with the displacement velocity of the web.

When the speed of the laminar material increases, it remains less time under the reach of the laser beam emitters, and this produces a reduction in the emission time on each point to be treated, reducing the treatment produced on each point if no correction in the initial emission parameters is introduced. Also, other effects can be produced, such an increased cooling by the surrounding air due to the speed increase.

To compensate for said increase in the velocity, the intensity of the emitted laser beam has to be increased in a controlled manner to maintain constant the treatment resulting on the laminar material. The dynamic adjustment algorithm determines how the initial emission parameters have to be modified to maintain constant the energy delivered on the laminar material, and therefore the treatment obtained, at different speeds of the web of laminar material. This can be achieved for example by integrating the area of the laser beam with the emission duration of the laser beam on a point of the laminar material to be treated with the power of the laser beam.

Said dynamic adjustment algorithm can be created with data obtained from preceding treatment jobs, or from experimentation.

Typically, the dynamic adjustment algorithm will be configured to decrease a laser beam emission time on each point of the laminar material to be treated, allowing for a faster movement of the web of laminar material, while maintaining constant the total energy delivered on each point of the laminar material by increasing a laser beam power on each point of the laminar material to be treated.

Optionally, the dynamic adjustment algorithm also considers the increased cooling effect produced on the web of laminar material by the surrounding air due to the increased speed, considering an additional increase in the laser beam power to compensate for said increased cooling effect to maintain constant the total energy delivered.

According to the present invention, in order to better control the emission parameters of the laser beam emitters, the method further proposes:
directing a minority fraction of the laser beam emitted by each laser beam emitter towards an emission parameter sensor;
detecting in real time with the emission parameter sensor the real emission parameters of the fraction of the laser beam incident thereon;
detecting in real time by comparison any deviation between the detected real emission parameters and the velocity adjusted emission parameters to be applied by each laser beam emitter according to the current velocity of the web of laminar material;
when deviations above a predefined threshold are detected, calculating deviation adjusted emission parameters, considering the velocity adjusted emission parameters to be applied by each laser beam emitter at the current velocity of the web and the real emission parameters measured by the emission parameter sensor, to correct the detected deviations producing a treatment with no deviations or with deviations within the predefined threshold in regard to the predefined treatment parameters to be obtained; and
applying immediately the deviation adjusted emission parameters to each laser beam emitter.

The emission parameter sensor is a high speed sensor capable of measuring in real time, from a sample consistent in a minority fraction of the laser beam emitted by the laser beam emitter, the real emission parameters thereof, typically the emission time, emission duration, emission power, and optionally also shape of the laser beam.

Those real emission parameters are compared with the velocity adjusted emission parameters to discover in real time deviations which could produce imperfections in the applied treatment.

Those variations can be produced for imperfections or deteriorations in the laser beam emitters, for alterations in the electricity feeding said laser beam emitters, for an incorrect regulation or calibration thereof, or due to mere soiling of some of the optic elements of the laser beam emitter, among other causes.

When deviations above certain predefined threshold are detected, the method comprises automatically calculating deviation adjusted emission parameters to correct said deviations.

If the real emission parameters is determined to have, for example, a power below the required power according to the velocity adjusted emission parameter at the current speed of the web, then deviation adjusted emission parameters with an increased power is calculated and applied to compensate for said reduced measured power. The same applies to the other emission parameters, for example if the real emission parameter determines that the laser beam is emitted too late or too soon, or its duration is too long or too short.

This additional verification allows for an increased precision and a quality improvement, permitting operations at higher speeds, typically above 200 m/min, or above 400 m/min or comprised between 500 m/min and 800 m/min.

Optionally, the step of calculating the initial emission parameters of the laser beam may include a calibration phase comprising:
calculating estimated emission parameters of the laser beam required to obtain a treatment fulfilling the treatment parameters on the selected laminar material moved at an initial treatment velocity, considering at least stored data of the treatment produced on the selected laminar material by different laser beam emission parameters;
treating a test portion of the flexible laminate with the previously defined treatment by the laser beam using the previously calculated estimated emission parameters;
analyzing images obtained by a camera from the treated test portion to detect quality parameters including at least the shape and distribution pattern of the treatment applied on the test portion and the intensity and/or depth thereof;
comparing the quality parameters with the previously defined treatment parameters to detect treatment defects;
when treatment defects above a predefined threshold are detected, proceed to modify the estimated emission parameters considering the quality parameters and the stored data to reduce or eliminate the treatment defects, treating a new test portion of the flexible laminate by the laser beam using the modified estimated emission parameters and repeat, on images obtained from the new test portion, the analyzing and the comparing steps to detect further treatment defects;
when no treatment defects above the predefined threshold are detected use the estimated emission parameters obtained from the calibration phase as the initial emission parameters.

This experimental phase of the treatment parameters on the test portion, at the reduced speed, reduces the consumption of laminar material and ensures the correct calibration of the initial emission parameters. Later the speed can be increased maintaining the quality thanks to the dynamic adjustment algorithm, all the laminar material used during the speed up phase being useful for production and not test material to be discarded, reducing the environmental impact of the method.

The estimated emission parameters are calculated considering the treatment to be obtained and the laminar material selected, using stored data of the energy required to locally melt, burn, sublimate, denature and/or darken a laminar material equal or similar to the laminar material to be treated and/or stored data of the treatment resulting from the application of a laser beam under different laser beam emission parameters on a laminar material equal or similar to the laminar material to be treated. This calculation can be obtained by implementing some calculation algorithms.

From the stored data, the estimated emission parameters required to obtain a treatment on the laminar material equal or close to the desired treatment to be obtained can be calculated.

Later said estimated emission parameters are tested on the test portion of the laminar material at a reduced speed, and the treatment obtained is automatically analyzed using a vision system comprising a camera directed towards the laminar material downstream from where the laser beam emitters project the laser beams on the laminar material.

The images obtained are automatically analyzed to determine the quality parameters of the treatment produced on the laminar material. Said quality parameters of the treatment obtained with the estimated emission parameters are compared with the parameters of the treatment to be obtained. If not, the analysis of the treatment really produced on the test portion of the laminar material allows for a calculation of modified estimated emission parameters, which can be newly tested on a new test portion of the laminar material, which will be again analyzed by the vision system.

The determination of the quality parameters can be performed, for example, by detecting pixels of the obtained images with a certain coloration or a range of colorations, corresponding with the treated regions or with the non-treated regions, and counting the number of pixels with said coloration, and/or the shape of the region containing the pixels with such coloration. Also, the color information can be indicative of the intensity of the treatment produced on the laminar material.

Once the estimated emission parameters produce a treatment which matches with the intended treatment to be obtained, with defects below the predefined threshold, then the estimated emission parameters become the initial emission parameters.

Preferably, the initial emission parameter and the velocity adjusted emission parameter include the power of the laser beam and the duration of the emission of the laser beam on each point of the laminar material to be treated, and optionally also the moment in time in which the laser beam is emitted and/or the laser beam shape.

The initial emission parameter and the velocity adjusted emission parameter can also include movement instructions to control the movement of the laser beam on the laminar material in coordination with the movement of the web of laminar material.

The calculation of the initial emission parameter, the velocity adjusted emission parameter and/or the deviation adjusted emission parameter can further include determining the total energy to be delivered by the laser beam on each point of the laminar material to be treated to obtain the defined treatment parameters considering the stored data, and calculating a laser beam power and a laser beam emission time on each point to be treated to deliver the previously determined amount of energy.

The vision system can be used during the acceleration of the web of laminar material and also when the web is moving at the final treatment velocity to compare the treatment produced in the laminar web with the treatment parameters to be obtained initially defined. Any deviation detected by this comparison can be used to calculate an adjustment on the velocity adjusted emission parameters to improve the resulting treatment in the same manner in which the estimated emission parameters are adjusted as a result of the analysis of the images obtained from the laminar material.

Despite the above, a quality control using only the vision system is not very effective at very high velocities above 200m/min and produces a delay between the defective treatment and the correction thereof, producing waste material. In this regard, the measurement of the real emission parameters directly from a fraction of the laser beam allows for a faster correction of the errors, reducing the waste material, and also permits a much faster detection and correction of deviations.

The proposed method can be computer implemented.

According to a preferred embodiment of the present invention, the treatment is an array of micro-perforated dots. In this case the initial emission parameters will be selected to deliver energy enough to perforate the laminar material on each point where the laser beam is projected.

When the calibration step is performed, the images obtained from the test portion of the laminar material will be analyzed to determine the position and size of each micro-perforated dot, in order to determine if its size, shape and position coincides with the previously defined treatment parameters, within the predefined threshold of deviation considered acceptable.

According to a second aspect, the present invention is directed towards the laser beam system required to implement the above described method.

The laser beam system comprises a conveying device adapted to convey a web of laminar material in a convey direction, at least one laser beam emitter device configured to emit a controlled laser beam towards the web of laminar material and a control device controlling the conveying device and the at least one laser beam emitter and with access to a digital memory containing at least the above mentioned stored data and the treatment parameters of the treatment to be applied with each laser beam emitter on the selected laminar material.

The control device is configured to implement the essential steps of the previously described method and also can be configured to implement the non-essential steps of the previously described method.

According to the present invention, each laser beam emitter is associated with a laser beam splitter configured to direct a minority fraction of the emitted laser beam towards an emission parameter sensor connected to the control device and configured to detect in real time real emission parameters of the laser beam emitted by each laser beam emitter.

The laser beam splitter is a lens with very high transparency, so that the vast majority of the laser beam passes through it, and only a small part will be reflected to the emission parameter sensor, which is an ultra-fast sensor capable of detecting the emission parameters of the fraction of the laser beam incident on the sensor.

Thus, the proposed emission parameter sensor is responsible for verifying that an optical beam of photons is being fired for each point of the laminar material to be treated, in synchronization with the electronic control signal responsible for triggering the emission of the laser beam (typically the signal transmitting the emission parameters to the laser beam emitter), and also that the power and optionally also the shape of the delivered laser beam corresponds with emission parameters to be implemented.

In this case, the control device can be configured to detect in real time by comparison any deviation between the detected real emission parameters and the velocity adjusted emission parameters to be applied by each laser beam emitter according to the current velocity of the web of laminar material. When deviations above a predefined threshold are detected, the control device will be configured to calculate deviation adjusted emission parameters, considering the velocity adjusted emission parameters to be applied by each laser beam emitter at the current velocity of the web and the real emission parameters measured by the emission parameter sensor, to correct the detected deviations producing a treatment with no deviations or with deviations within the predefined threshold in regard to the predefined treatment parameters to be obtained, and to apply immediately the deviation adjusted emission parameters to each laser beam emitter.

The system can further comprise at least one camera and a light source facing an inspection region of the laminar material placed downstream from the target region of the at least one laser beam emitter, the at least one camera being connected with the control device.

The method and the system permit the generation of a precise report on the number and position of the errors in the treatment produced on the laminar material for each laser beam emitter.

### Detailed description of an exemplary embodiment

First, a laminar material is selected and the treatment to be applied on a web of said selected laminar material is determined. The treatment can include melt, burn, sublimate, denature and/or darken points, lines or regions of the laminar material according to a predefined shape or array.

In this example, the treatment consists in the creation of a matrix of micro-perforations of a pre-established diameter, for example to allow a container to breathe, or to weaken the material along a cutting line.

The laser beam emitter responsible for carrying out said treatment will be, in this example, a blue laser.

Depending on the characteristics of the selected laminar material, i.e. its composition and thickness, and depending on the size of the desired micro-perforations, a control device calculates estimated emission parameters for the laser beam that should be generated to obtain the defined treatment, defining the laser pulse time and its average power, or the integral of the area resulting from conjugating the pulse time with the pulse amplitude.

The control device applies these estimated emission parameters to each laser beam emitter and executes a treatment on a test portion of the web of the laminar material by sending electronic activation pulses to each laser beam emitter, said test portion being in motion at an initial treatment velocity under 20m/min during the treatment.

The control unit, from the electronic control pulse, generates an electronic trigger pulse that activates a lighting system and a camera facing an inspection portion of the web of the laminar material placed downstream from the target portion of the laser beam emitters, producing a simultaneous illumination and image capturing of the treated laminar material positioned in the inspection portion.

The camera will also see at all times if the laminar material is being treated or not.

The camera also allows statistical quality control, extracting the shape of the treatment produced (in this example the shape of the micro-perforations).

The images obtained are analyzed by the control device obtaining quality parameters of the treatment produced, and the quality parameters are compared with the treatment parameters of the treatment to be implemented initially defined in order to detect deviations above certain predefined threshold.

In case said deviations are detected, then the estimated emission parameters can be automatically adjusted to reduce or to eliminate the detected deviations, for example implementing certain prestored algorithms which determine the adjustments required on the emission parameters depending on the deviations detected. For example, if the micro-perforations are too big, a reduction in the time and/or in the power of the laser beam can be calculated to obtain micro-perforations of the desired size according to the treatment parameters initially defined.

A new test portion of the laminar material can be treated, repeating the obtention of images and its analysis until no deviations above the predefined threshold are detected. Then the estimated emission parameters, with the calculated adjustments, become the initial emission parameters implemented on the laser beam emitters to start the continuous treatment of the web of laminar material starting at the initial treatment velocity.

Then the speed of the web is subsequently increased while the initial emission parameters of the laser beam emitters are automatically adapted to the increasing speed of the web to maintain constant the resulting treatment.

The emission parameters adapted to the increasing speed are velocity adjusted emission parameters and are calculated using a dynamic adjustment algorithm configured to modify any given emission parameters in function of the web velocity to maintain constant the treatment parameters of the treatment applied on the laminar material at any velocity within a velocity rank including the initial treatment velocity and a final treatment velocity.

However, especially at speeds above 200m/min, small deficiencies in the laser beam may cause errors in the treatment of the laminar material. For this reason, it is proposed to include an emission parameter sensor capable of measuring the real emission parameters in the emitted laser beam, especially the average power and the pulse width.

Using the same power and a pulse width, and the same focal lens the resulting treatment is always the same. Therefore, by verifying the precision and uniformity of the real emission parameters of the laser beam, we ensure that the same treatment is being obtained.

To carry out this verification and control, it is necessary to take a sample from the laser beam, but without having significant losses that could vary the treatment. In the present embodiment, a beam splitter is used, which is basically a SeZn optical crystal that allows 99.9% of the energy of the laser beam to pass through and reflects or deflects only around 0.1% of the incident laser beam at a given angle. This assumes that for a 120 watt output laser, the reflected power is 120mw. Considering that the range of stability of the laser is +/-5%, and that the treatment is not affected, with the loss of 0.1% The result of the treatment will not change.

The laser beam passing through the beam splitter will also suffer some diffraction, which should be considered in the arrangement of the laser beam system settings.

The laser beam system may also include a motorized mirror to move the laser beam over the sheet material. Said motorized mirror will preferably be located downstream of the beam splitter.

Preferably, the reaction time of the emission parameters sensor is shorter, or less than a fifth, than the emission time of the laser beam on one point of the laminar material to obtain the treatment.

For example, to produce micro-perforations on the laminar material the average emission time of the laser beam is 50 microseconds, and the reaction time of the emission parameters sensor is less than 10 microseconds, and preferably around 5 microseconds.

The combination of the emission parameter sensor with the camera and its associated lighting system, all coordinated by the control device, allows a treatment of the flexible sheet at high speeds greater than 150m/min and up to speeds of 700 m/min or even 800 m/min, maintaining the quality of the treatment carried out on the flexible sheet at all times, making adjustments in real time based on the results obtained to ensure quality.

## Claims

1. Method for adjusting a laser beam system for continuous treatment of a laminar material at increasing speeds and constant quality, the system comprising at least one laser beam emitter, the method comprising:
selecting a laminar material to be treated and defining treatment parameters of a treatment to be applied with a laser beam emitted by each laser beam emitter on the selected laminar material, the treatment parameters including shape and distribution pattern of the treatment and intensity and/or depth thereof;
calculating initial emission parameters of each laser beam emitter required to obtain a treatment fulfilling the treatment parameters on the selected laminar material moved at an initial treatment velocity, considering at least stored data of the energy required to locally melt, burn, sublimate, denature and/or darken a laminar material equal or similar to the laminar material to be treated and/or stored data of the treatment resulting from the application of a laser beam under different laser beam emission parameters on a laminar material equal or similar to the laminar material to be treated;
calculating velocity adjusted emission parameters of each laser beam emitter adjusting the previously calculated initial emission parameters by a stored dynamic adjustment algorithm configured to modify any given emission parameters in function of the web velocity to maintain constant the treatment parameters of the treatment applied on the laminar material at any velocity within a velocity rank including the initial treatment velocity and a final treatment velocity; and
accelerating the web of the selected flexible laminate from the initial treatment velocity to the final treatment velocity while each laser beam emitter emits a laser beam applying the treatment to the laminar material using the velocity adjusted emission parameters in coordination with the displacement velocity of the web;
**characterized in that** the method further comprises:
directing a minority fraction of the laser beam emitted by each laser beam emitter towards an emission parameter sensor;
detecting in real time with the emission parameter sensor the real emission parameters of the fraction of the laser beam incident thereon;
detecting in real time by comparison any deviation between the detected real emission parameters and the velocity adjusted emission parameters to be applied by each laser beam emitter according to the current velocity of the web of laminar material;
when deviations above a predefined threshold are detected, calculating deviation adjusted emission parameters, considering the velocity adjusted emission parameters to be applied by each laser beam emitter at the current velocity of the web and the real emission parameters measured by the emission parameter sensor, to correct the detected deviations producing a treatment with no deviations or with deviations within the predefined threshold in regard to the predefined treatment parameters to be obtained; and
applying immediately the deviation adjusted emission parameters to each laser beam emitter.

2. The method according to claim 1 wherein the dynamic adjustment algorithm is configured to decrease a laser beam emission time on each point of the laminar material to be treated, allowing for a faster movement of the web of laminar material, while maintaining constant the total energy delivered on each point of the laminar material by increasing a laser beam power on each point of the laminar material to be treated.

3. The method according to any preceding claim wherein the step of calculating the initial emission parameters of the laser beam includes a calibration phase comprising:
calculating estimated emission parameters of the laser beam required to obtain a treatment fulfilling the treatment parameters on the selected laminar material moved at an initial treatment velocity, considering at least stored data of the energy required to locally melt, burn, sublimate, denature and/or darken a laminar material equal or similar to the laminar material to be treated and/or stored data of the treatment resulting from the application of a laser beam under different laser beam emission parameters on a laminar material equal or similar to the laminar material to be treated;
treating a test portion of the flexible laminate with the previously defined treatment by the laser beam using the previously calculated estimated emission parameters;
analyzing images obtained by a camera from the treated test portion to detect quality parameters including at least the shape and distribution pattern of the treatment applied on the test portion and the intensity and/or depth thereof;
comparing the quality parameters with the previously defined treatment parameters to detect treatment defects;
when treatment defects above a predefined threshold are detected, proceed to modify the estimated emission parameters considering the quality parameters and the stored data to reduce or eliminate the treatment defects, treating a new test portion of the flexible laminate by the laser beam using the modified estimated emission parameters and repeat, on images obtained from the new test portion, the analyzing and the comparing steps to detect further treatment defects;
when no treatment defects above the predefined threshold are detected use the estimated emission parameters obtained from the calibration phase as the initial emission parameters.

4. The method according to claim 3 wherein during the calibration phase the test portion is treated having a velocity comprised between 0m/min and 20m/min, or preferably comprised between 0m/min and 10m/min.

5. The method according to any preceding claim wherein the final treatment velocity is above 200 m/min, or above 400 m/min or comprised between 500 m/min and 800 m/min.

6. The method according to any preceding claim wherein the initial emission parameter and the velocity adjusted emission parameter include the power of the laser beam and the duration of the emission of the laser beam on each point of the laminar material to be treated, and optionally also the moment in time in which the laser beam is emitted and/or the laser beam shape.

7. The method according to claim 6 wherein the initial emission parameter and the velocity adjusted emission parameter also include movement instructions to control the movement of the laser beam on the laminar material in coordination with the movement of the web of laminar material.

8. The method according to any preceding claim wherein the calculation of the initial emission parameter, the velocity adjusted emission parameter and/or the deviation adjusted emission parameter includes determining the total energy to be delivered by the laser beam on each point of the laminar material to be treated to obtain the defined treatment parameters considering the stored data, and calculating a laser beam power and a laser beam emission time on each point to be treated to deliver the previously determined amount of energy.

9. Laser beam system for continuous treatment of a laminar material at increasing speeds and constant quality, the system comprising:
a conveying device adapted to convey a web of laminar material in a convey direction;
at least one laser beam emitter device configured to emit a controlled laser beam towards the web of laminar material;
a control device controlling the conveying device and the at least one laser beam emitter and with access to a digital memory containing at least treatment parameters of the treatment to be applied by each laser beam emitter on the selected laminar material, the treatment parameters including shape and distribution pattern of the treatment and intensity and/or depth thereof, and stored data of the energy required to locally melt, burn, sublimate,
denature and/or darken a laminar material equal or similar to the laminar material to be treated and/or stored data of the treatment resulting from the application of a laser beam under different laser beam emission parameters on a laminar material equal or similar to the laminar material to be treated;
the control device being configured to calculate initial emission parameters of each laser beam emitter required to obtain a treatment fulfilling predefined treatment parameters on the web of a predefined laminar material moved at an initial treatment velocity, considering at least the stored data;
the control device is also configured to calculate velocity adjusted emission parameters of each laser beam emitter adjusting the previously calculated initial emission parameters by a stored dynamic adjustment algorithm configured to modify any given emission parameters in function of the web velocity to maintain constant the treatment parameters of the treatment applied on the laminar material at any velocity within a velocity rank including the initial treatment velocity and a final treatment velocity;
**characterized in that** the laser beam system comprises:
an emission parameter sensor, and
each laser beam emitter is associated with a laser beam splitter configured to direct a minority fraction of the emitted laser beam towards the emission parameter sensor connected to the control device and configured to detect in real time real emission parameters of the laser beam emitted by each laser beam emitter.

10. The system according to claim 9 wherein the dynamic adjustment algorithm is configured to decrease a laser beam emission time on each point of the laminar material to be treated, allowing for a faster movement of the web of laminar material, while maintaining constant the total energy delivered on each point of the laminar material by increasing a laser beam power on each point of the laminar material to be treated.

11. The system according to claim 9 wherein the control device is also configured:
to detect in real time by comparison any deviation between the detected real emission parameters and the velocity adjusted emission parameters to be applied by each laser beam emitter according to the current velocity of the web of laminar material,
when deviations above a predefined threshold are detected, to calculate deviation adjusted emission parameters, considering the velocity adjusted emission parameters to be applied by each laser beam emitter at the current velocity of the web and the real emission parameters measured by the emission parameter sensor, to correct the detected deviations producing a treatment with no deviations or with deviations within the predefined threshold in regard to the predefined treatment parameters to be obtained; and
to apply immediately the deviation adjusted emission parameters to each laser beam emitter.

12. The system according to any preceding claim 9 to 11 wherein the system further comprises at least one camera and a light source facing an inspection region of the laminar material placed downstream from the target region of the at least one laser beam emitter, the at least one camera being connected with the control device.

## Patentansprüche

1. Verfahren zum Einstellen eines Laserstrahlsystems zur kontinuierlichen Behandlung eines laminaren Materials bei zunehmenden Geschwindigkeiten und konstanter Qualität, wobei das System mindestens einen Laserstrahlemitter umfasst, wobei das Verfahren Folgendes umfasst:
Auswählen eines zu behandelnden laminaren Materials und Definieren von Behandlungsparametern einer Behandlung, die mit einem von jedem Laserstrahlemitter emittierten Laserstrahl auf das ausgewählte laminare Material anzuwenden ist, wobei die Behandlungsparameter Form und Verteilungsmuster der Behandlung und Intensität und/oder Tiefe davon enthalten;
Berechnen der anfänglichen Emissionsparameter jedes Laserstrahlemitters, die erforderlich sind, um eine Behandlung, die die Behandlungsparameter erfüllt, auf dem ausgewählten laminaren Material, das sich mit einer anfänglichen Behandlungsgeschwindigkeit bewegt, zu erhalten, wobei mindestens gespeicherte Daten der Energie, die erforderlich ist, um ein laminares Material, das dem zu behandelnden laminaren Material gleich oder ähnlich ist, lokal zu schmelzen, zu verbrennen, zu sublimieren, zu denaturieren und/oder zu verdunkeln, und/oder gespeicherte Daten der Behandlung, die sich aus der Anwendung eines Laserstrahls unter unterschiedlichen Laserstrahlemissionsparametern auf ein laminares Material, das dem zu behandelnden laminaren Material gleich oder ähnlich ist, ergibt, berücksichtigt werden;
Berechnen von geschwindigkeitseingestellten Emissionsparametern jedes Laserstrahlemitters, wobei die zuvor berechneten anfänglichen Emissionsparameter durch einen gespeicherten dynamischen Einstellungsalgorithmus eingestellt werden, der dazu konfiguriert ist, alle gegebenen Emissionsparameter in Abhängigkeit von der Bahngeschwindigkeit zu modifizieren, um die Behandlungsparameter der auf das laminare Material angewendeten Behandlung bei jeder Geschwindigkeit innerhalb eines Geschwindigkeitsbereichs, der die anfängliche Behandlungsgeschwindigkeit und eine endgültige Behandlungsgeschwindigkeit enthält, konstant zu halten; und
Beschleunigen der Bahn des ausgewählten flexiblen Laminats von der anfänglichen Behandlungsgeschwindigkeit auf die endgültige Behandlungsgeschwindigkeit, während jeder Laserstrahlemitter einen Laserstrahl emittiert, der die Behandlung auf das laminare Material unter Verwendung der geschwindigkeitseingestellten Emissionsparameter in Abstimmung mit der Verschiebungsgeschwindigkeit der Bahn anwendet;
**dadurch gekennzeichnet, dass** das Verfahren ferner Folgendes umfasst:
Richten eines Minderheitsanteils des von jedem Laserstrahlemitter emittierten Laserstrahls auf einen Emissionsparametersensor;
Erkennen in Echtzeit mit dem Emissionsparametersensor die realen Emissionsparameter des darauf einfallenden Anteils des Laserstrahls;
Erkennen in Echtzeit durch Vergleich jeder Abweichung zwischen den erkannten realen Emissionsparametern und den geschwindigkeitseingestellten Emissionsparametern, die von jedem Laserstrahlemitter gemäß der aktuellen Geschwindigkeit der Bahn aus laminarem Material anzuwenden sind;
wenn Abweichungen über einem vordefinierten Schwellenwert erkannt werden, Berechnen von abweichungseingestellten Emissionsparametern, wobei die geschwindigkeitseingestellten Emissionsparameter, die von jedem Laserstrahlemitter bei der aktuellen Geschwindigkeit der Bahn anzuwenden sind, und die vom Emissionsparametersensor gemessenen realen Emissionsparameter berücksichtigt werden, um die erkannten Abweichungen zu korrigieren, wobei eine Behandlung ohne Abweichungen oder mit Abweichungen innerhalb des vordefinierten Schwellenwerts in Bezug auf die zu erhaltenden vordefinierten Behandlungsparameter erzeugt wird; und
sofortiges Anwenden der abweichungseingestellten Emissionsparameter auf jeden Laserstrahlemitter.

2. Verfahren nach Anspruch 1, wobei der dynamische Einstellungsalgorithmus dazu konfiguriert ist, eine Laserstrahlemissionszeit an jedem Punkt des zu behandelnden laminaren Materials zu verringern, was eine schnellere Bewegung der Bahn des laminaren Materials ermöglicht, während die an jedem Punkt des laminaren Materials abgegebene Gesamtenergie konstant gehalten wird, indem eine Laserstrahlleistung an jedem Punkt des zu behandelnden laminaren Materials erhöht wird.

3. Verfahren nach einem der vorhergehenden Ansprüche, wobei der Schritt des Berechnens der anfänglichen Emissionsparameter des Laserstrahls eine Kalibrierungsphase enthält, umfassend:
Berechnen von geschätzten Emissionsparametern des Laserstrahls, die erforderlich sind, um eine Behandlung, die die Behandlungsparameter erfüllt, auf dem ausgewählten laminaren Material, das sich mit einer anfänglichen Behandlungsgeschwindigkeit bewegt, zu erhalten, wobei mindestens gespeicherte Daten der Energie, die erforderlich ist, um ein laminares Material, das dem zu behandelnden laminaren Material gleich oder ähnlich ist, lokal zu schmelzen, zu verbrennen, zu sublimieren, zu denaturieren und/oder zu verdunkeln, und/oder gespeicherte Daten der Behandlung, die sich aus der Anwendung eines Laserstrahls unter unterschiedlichen Laserstrahlemissionsparametern auf ein laminares Material, das dem zu behandelnden laminaren Material gleich oder ähnlich ist, ergibt, berücksichtigt werden;
Behandeln eines Testabschnitts des flexiblen Laminats mit der zuvor definierten Behandlung durch den Laserstrahl unter Verwendung der zuvor berechneten geschätzten Emissionsparameter;
Analysieren von Bildern, die durch eine Kamera von dem behandelten Testabschnitt erhalten werden, um Qualitätsparameter zu erkennen, die mindestens die Form und das Verteilungsmuster der auf den Testabschnitt angewandten Behandlung sowie die Intensität und/oder Tiefe davon enthalten;
Vergleichen der Qualitätsparameter mit den zuvor definierten Behandlungsparametern, um Behandlungsfehler zu erkennen;
wenn Behandlungsfehler über einem vordefinierten Schwellenwert erkannt werden, fortfahren, um die geschätzten Emissionsparameter zu modifizieren, wobei die Qualitätsparameter und die gespeicherten Daten berücksichtigt werden, um die Behandlungsfehler zu reduzieren oder zu beseitigen, einen neuen Testabschnitt des flexiblen Laminats durch den Laserstrahl unter Verwendung der modifizierten geschätzten Emissionsparameter zu behandeln und anhand der von dem neuen Testabschnitt erhaltenen Bilder die Analyse- und Vergleichsschritte zu wiederholen, um weitere Behandlungsfehler zu erkennen;
wenn keine Behandlungsfehler über dem vordefinierten Schwellenwert erkannt werden, Verwenden der geschätzten Emissionsparameter, die aus der Kalibrierungsphase erhalten werden, als anfängliche Emissionsparameter.

4. Verfahren nach Anspruch 3, wobei der Testabschnitt während der Kalibrierungsphase mit einer Geschwindigkeit behandelt wird, die zwischen 0 m/min und 20 m/min liegt, oder vorzugsweise zwischen 0 m/min und 10 m/min liegt.

5. Verfahren nach einem der vorhergehenden Ansprüche, wobei die endgültige Behandlungsgeschwindigkeit über 200 m/min oder über 400 m/min liegt oder zwischen 500 m/min und 800 m/min liegt.

6. Verfahren nach einem der vorhergehenden Ansprüche, wobei der anfängliche Emissionsparameter und der geschwindigkeitseingestellte Emissionsparameter die Leistung des Laserstrahls und die Dauer der Emission des Laserstrahls auf jeden Punkt des zu behandelnden laminaren Materials enthalten, und gegebenenfalls auch den Zeitpunkt, zu dem der Laserstrahl emittiert wird, und/oder die Laserstrahlform.

7. Verfahren nach Anspruch 6, wobei der anfängliche Emissionsparameter und der geschwindigkeitseingestellte Emissionsparameter auch Bewegungsanweisungen enthalten, um die Bewegung des Laserstrahls auf dem laminaren Material in Abstimmung mit der Bewegung der Bahn aus laminarem Material zu steuern.

8. Verfahren nach einem der vorhergehenden Ansprüche, wobei die Berechnung des anfänglichen Emissionsparameters, des geschwindigkeitseingestellten Emissionsparameters und/oder des abweichungseingestellten Emissionsparameters das Bestimmen der Gesamtenergie, die durch den Laserstrahl an jedem Punkt des zu behandelnden laminaren Materials abzugeben ist, um die definierten Behandlungsparameter zu erhalten, wobei die gespeicherten Daten berücksichtigt werden, und das Berechnen einer Laserstrahlleistung und einer Laserstrahlemissionszeit an jedem zu behandelnden Punkt enthält, um die zuvor bestimmte Energiemenge abzugeben.

9. Laserstrahlsystem zur kontinuierlichen Behandlung eines laminaren Materials bei zunehmenden Geschwindigkeiten und konstanter Qualität, wobei das System Folgendes umfasst:
eine Fördervorrichtung, die dazu angepasst ist, eine Bahn aus laminarem Material in einer Förderrichtung zu fördern;
mindestens eine Laserstrahlemissionsvorrichtung, die dazu konfiguriert ist, einen gesteuerten Laserstrahl auf die Bahn aus laminarem Material zu emittieren;
eine Steuervorrichtung, die die Fördervorrichtung und den mindestens einen Laserstrahlemitter steuert und Zugriff auf einen digitalen Speicher hat, der mindestens Behandlungsparameter der von jedem Laserstrahlemitter auf das ausgewählte laminare Material anzuwendenden Behandlung, wobei die Behandlungsparameter Form und Verteilungsmuster der Behandlung und Intensität und/oder Tiefe davon enthalten, und gespeicherte Daten der Energie, die erforderlich ist, um ein laminares Material, das dem zu behandelnden laminaren Material gleich oder ähnlich ist, lokal zu schmelzen, zu verbrennen, zu sublimieren, zu denaturieren und/oder zu verdunkeln, und/oder gespeicherte Daten der Behandlung enthält, die sich aus der Anwendung eines Laserstrahls unter unterschiedlichen Laserstrahlemissionsparametern auf ein laminares Material, das dem zu behandelnden laminaren Material gleich oder ähnlich ist, ergibt;
wobei die Steuervorrichtung dazu konfiguriert ist, die anfänglichen Emissionsparameter jedes Laserstrahlemitters zu berechnen, die erforderlich sind, um eine Behandlung zu erhalten, die vordefinierte Behandlungsparameter auf der Bahn eines vordefinierten laminaren Materials erfüllt, das sich mit einer anfänglichen Behandlungsgeschwindigkeit bewegt, wobei mindestens die gespeicherten Daten berücksichtigt werden;
wobei die Steuervorrichtung auch dazu konfiguriert ist, geschwindigkeitseingestellte Emissionsparameter jedes Laserstrahlemitters zu berechnen, wobei die zuvor berechneten anfänglichen Emissionsparameter durch einen gespeicherten dynamischen Einstellungsalgorithmus eingestellt werden, der dazu konfiguriert ist, alle gegebenen Emissionsparameter in Abhängigkeit von der Bahngeschwindigkeit zu modifizieren, um die Behandlungsparameter der auf das laminare Material angewendeten Behandlung bei jeder Geschwindigkeit innerhalb eines Geschwindigkeitsbereichs, der die anfängliche Behandlungsgeschwindigkeit und eine endgültige Behandlungsgeschwindigkeit enthält, konstant zu halten;
**dadurch gekennzeichnet, dass** das Laserstrahlsystem Folgendes umfasst:
einen Emissionsparametersensor, und
wobei jeder Laserstrahlemitter einem Laserstrahlteiler zugeordnet ist, der dazu konfiguriert ist, einen Minderheitsanteil des emittierten Laserstrahls auf den Emissionsparametersensor zu richten, der mit der Steuervorrichtung verbunden und dazu konfiguriert ist, reale Emissionsparameter des von jedem Laserstrahlemitter emittierten Laserstrahls in Echtzeit zu erkennen.

10. System nach Anspruch 9, wobei der dynamische Einstellungsalgorithmus dazu konfiguriert ist, eine Laserstrahlemissionszeit an jedem Punkt des zu behandelnden laminaren Materials zu verringern, was eine schnellere Bewegung der Bahn des laminaren Materials ermöglicht, während die an jedem Punkt des laminaren Materials abgegebene Gesamtenergie konstant gehalten wird, indem eine Laserstrahlleistung an jedem Punkt des zu behandelnden laminaren Materials erhöht wird.

11. System nach Anspruch 9, wobei die Steuervorrichtung auch zu Folgendem konfiguriert ist:
Erkennen in Echtzeit durch Vergleich jeder Abweichung zwischen den erkannten realen Emissionsparametern und den geschwindigkeitseingestellten Emissionsparametern, die von jedem Laserstrahlemitter gemäß der aktuellen Geschwindigkeit der Bahn aus laminarem Material anzuwenden sind,
wenn Abweichungen über einem vordefinierten Schwellenwert erkannt werden, Berechnen von abweichungseingestellten Emissionsparametern, wobei die geschwindigkeitseingestellten Emissionsparameter, die von jedem Laserstrahlemitter bei der aktuellen Geschwindigkeit der Bahn anzuwenden sind, und die vom Emissionsparametersensor gemessenen realen Emissionsparameter berücksichtigt werden, um die erkannten Abweichungen zu korrigieren, wobei eine Behandlung ohne Abweichungen oder mit Abweichungen innerhalb des vordefinierten Schwellenwerts in Bezug auf die zu erhaltenden vordefinierten Behandlungsparameter erzeugt wird; und
sofortiges Anwenden der abweichungseingestellten Emissionsparameter auf jeden Laserstrahlemitter.

12. System nach einem der vorhergehenden Ansprüche 9 bis 11, wobei das System ferner mindestens eine Kamera und eine Lichtquelle umfasst, die einer Inspektionsregion des laminaren Materials zugewandt ist, die stromabwärts von der Zielregion des mindestens einen Laserstrahlemitters platziert ist, wobei die mindestens eine Kamera mit der Steuervorrichtung verbunden ist.

## Revendications

1. Procédé pour régler un système de faisceau laser pour le traitement continu d'un matériau laminaire à des vitesses croissantes et une qualité constante, le système comprenant au moins un émetteur de faisceau laser, le procédé comprenant :
sélectionner un matériau laminaire à traiter et définir des paramètres de traitement d'un traitement à appliquer avec un faisceau laser émis par chaque émetteur de faisceau laser sur le matériau laminaire sélectionné, les paramètres de traitement comportant la forme et le motif de distribution du traitement et l'intensité et/ou la profondeur de celui-ci ;
calculer des paramètres d'émission initiaux de chaque émetteur de faisceau laser requis pour obtenir un traitement répondant aux paramètres de traitement sur le matériau laminaire sélectionné déplacé à une vitesse de traitement initiale, en tenant compte au moins de données stockées de l'énergie requise pour fondre, brûler, sublimer, dénaturer et/ou obscurcir localement un matériau laminaire égal ou similaire au matériau laminaire à traiter et/ou de données stockées du traitement résultant de l'application d'un faisceau laser sous différents paramètres d'émission de faisceau laser sur un matériau laminaire égal ou similaire au matériau laminaire à traiter ;
calculer des paramètres d'émission réglés par la vitesse de chaque émetteur de faisceau laser en réglant les paramètres d'émission initiaux précédemment calculés par un algorithme de réglage dynamique stocké configuré pour modifier tout paramètre d'émission donné en fonction de la vitesse de bande pour maintenir constants les paramètres de traitement du traitement appliqué sur le matériau laminaire à toute vitesse dans un rang de vitesse comportant la vitesse de traitement initiale et une vitesse de traitement finale ; et
accélérer la bande de la structure laminaire flexible sélectionnée de la vitesse de traitement initiale jusqu'à la vitesse de traitement finale pendant que chaque émetteur de faisceau laser émet un faisceau laser appliquant le traitement au matériau laminaire en utilisant les paramètres d'émission réglés par la vitesse en coordination avec la vitesse de déplacement de la bande ;
**caractérisé en ce que** le procédé comprend en outre :
diriger une fraction minoritaire du faisceau laser émis par chaque émetteur de faisceau laser vers un capteur de paramètre d'émission ;
détecter en temps réel, avec le capteur de paramètre d'émission, les paramètres d'émission réels de la fraction du faisceau laser incident sur celui-ci ;
détecter en temps réel par comparaison tout écart entre les paramètres d'émission réels détectés et les paramètres d'émission réglés par la vitesse à appliquer par chaque émetteur de faisceau laser en fonction de la vitesse actuelle de la bande de matériau laminaire ;
lorsque des écarts au-dessus d'un seuil prédéfini sont détectés, calculer des paramètres d'émission réglés par l'écart, en tenant compte des paramètres d'émission réglés par la vitesse à appliquer par chaque émetteur de faisceau laser à la vitesse actuelle de la bande et des paramètres d'émission réels mesurés par le capteur de paramètre d'émission, pour corriger les écarts détectés produisant un traitement sans écarts ou avec des écarts dans le seuil prédéfini par rapport aux paramètres de traitement prédéfinis à obtenir ; et
appliquer immédiatement les paramètres d'émission réglés par l'écart à chaque émetteur de faisceau laser.

2. Procédé selon la revendication 1, dans lequel l'algorithme de réglage dynamique est configuré pour réduire un temps d'émission de faisceau laser sur chaque point du matériau laminaire à traiter, permettant un déplacement plus rapide de la bande de matériau laminaire, tout en maintenant constante l'énergie totale délivrée sur chaque point du matériau laminaire en augmentant une puissance de faisceau laser sur chaque point du matériau laminaire à traiter.

3. Procédé selon l'une quelconque des revendications précédentes, dans lequel l'étape de calculer les paramètres d'émission initiaux du faisceau laser comporte une phase de calibration comprenant :
calculer des paramètres d'émission estimés du faisceau laser requis pour obtenir un traitement répondant aux paramètres de traitement sur le matériau laminaire sélectionné déplacé à une vitesse de traitement initiale, en tenant compte au moins de données stockées de l'énergie requise pour fondre, brûler, sublimer, dénaturer et/ou obscurcir localement un matériau laminaire égal ou similaire au matériau laminaire à traiter et/ou de données stockées du traitement résultant de l'application d'un faisceau laser sous différents paramètres d'émission de faisceau laser sur un matériau laminaire égal ou similaire au matériau laminaire à traiter ;
traiter une portion de test de la structure laminaire flexible avec le traitement précédemment défini par le faisceau laser en utilisant les paramètres d'émission estimés précédemment calculés ;
analyser des images obtenues par une caméra de la portion de test traitée pour détecter des paramètres de qualité comportant au moins la forme et le motif de distribution du traitement appliqué sur la portion de test et l'intensité et/ou la profondeur de celui-ci ;
comparer les paramètres de qualité avec les paramètres de traitement précédemment définis pour détecter des défauts de traitement ;
lorsque des défauts de traitement au-dessus d'un seuil prédéfini sont détectés, procéder à la modification des paramètres d'émission estimés en tentant compte des paramètres de qualité et des données stockées pour réduire ou éliminer les défauts de traitement, traiter une nouvelle portion de test de la structure laminaire flexible par le faisceau laser en utilisant les paramètres d'émission estimés modifiés et répéter, sur des images obtenues à partir de la nouvelle portion de test, les étapes d'analyse et de comparaison pour détecter des défauts de traitement additionnels ;
lorsqu'aucun défaut de traitement au-dessus du seuil prédéfini n'est détecté, utiliser les paramètres d'émission estimés obtenus à partir de la phase de calibration comme les paramètres d'émission initiaux.

4. Procédé selon la revendication 3, dans lequel, pendant la phase de calibration, la portion de test est traitée avec une vitesse comprise entre 0 m/min et 20 m/min, ou de préférence comprise entre 0 m/min et 10 m/min.

5. Procédé selon l'une quelconque des revendications précédentes, dans lequel la vitesse de traitement finale est supérieure à 200 m/min, ou supérieure à 400 m/min ou elle est comprise entre 500 m/min et 800 m/min.

6. Procédé selon l'une quelconque des revendications précédentes, dans lequel le paramètre d'émission initial et le paramètre d'émission réglé par la vitesse comportent la puissance du faisceau laser et la durée de l'émission du faisceau laser sur chaque point du matériau laminaire à traiter, et optionnellement aussi le moment dans le temps dans lequel le faisceau laser est émis et/ou la forme du faisceau laser.

7. Procédé selon la revendication 6, dans lequel le paramètre d'émission initial et le paramètre d'émission réglé par la vitesse comportent également des instructions de déplacement pour contrôler le déplacement du faisceau laser sur le matériau laminaire en coordination avec le déplacement de la bande de matériau laminaire.

8. Procédé selon l'une quelconque des revendications précédentes, dans lequel le calcul du paramètre d'émission initial, du paramètre d'émission réglé par la vitesse et/ou du paramètre d'émission réglé par l'écart comporte la détermination de l'énergie totale à délivrer par le faisceau laser sur chaque point du matériau laminaire à traiter pour obtenir les paramètres de traitement définis en tenant compte des données stockées, et le calcul d'une puissance de faisceau laser et d'un temps d'émission de faisceau laser sur chaque point à traiter pour délivrer la quantité d'énergie précédemment déterminée.

9. Système de faisceau laser pour le traitement continu d'un matériau laminaire à des vitesses croissantes et une qualité constante, le système comprenant :
un dispositif de transport adapté pour transporter une bande de matériau laminaire dans une direction de transport ;
au moins un dispositif émetteur de faisceau laser configuré pour émettre un faisceau laser contrôlé vers la bande de matériau laminaire ;
un dispositif de contrôle contrôlant le dispositif de transport et l'au moins un émetteur de faisceau laser et ayant accès à une mémoire numérique contenant au moins des paramètres de traitement du traitement à appliquer par chaque émetteur de faisceau laser sur le matériau laminaire sélectionné, les paramètres de traitement comportant la forme et le motif de distribution du traitement et l'intensité et/ou la profondeur de celui-ci, et des données stockées de l'énergie requise pour fondre, brûler, sublimer, dénaturer et/ou obscurcir localement un matériau laminaire égal ou similaire au matériau laminaire à traiter et/ou des données stockées du traitement résultant de l'application d'un faisceau laser sous différents paramètres d'émission de faisceau laser sur un matériau laminaire égal ou similaire au matériau laminaire à traiter ;
le dispositif de contrôle étant configuré pour calculer des paramètres d'émission initiaux de chaque émetteur de faisceau laser requis pour obtenir un traitement répondant aux paramètres de traitement prédéfinis sur la bande d'un matériau laminaire prédéfini déplacé à une vitesse de traitement initiale, en tenant compte au moins des données stockées ;
le dispositif de contrôle est également configuré pour calculer des paramètres d'émission réglés par la vitesse de chaque émetteur de faisceau laser en réglant les paramètres d'émission initiaux précédemment calculés par un algorithme de réglage dynamique stocké configuré pour modifier tout paramètre d'émission donné en fonction de la vitesse de bande pour maintenir constants les paramètres de traitement du traitement appliqué sur le matériau laminaire à toute vitesse dans un rang de vitesse comportant la vitesse de traitement initiale et une vitesse de traitement finale ;
**caractérisé en ce que** le système de faisceau laser comprend :
un capteur de paramètre d'émission, et
chaque émetteur de faisceau laser est associé avec un diviseur de faisceau laser configuré pour diriger une fraction minoritaire du faisceau laser émis vers le capteur de paramètre d'émission connecté au dispositif de contrôle et configuré pour détecter en temps réel des paramètres d'émission réels du faisceau laser émis par chaque émetteur de faisceau laser.

10. Système selon la revendication 9, dans lequel l'algorithme de réglage dynamique est configuré pour réduire un temps d'émission de faisceau laser sur chaque point du matériau laminaire à traiter, permettant un déplacement plus rapide de la bande de matériau laminaire, tout en maintenant constante l'énergie totale délivrée sur chaque point du matériau laminaire en augmentant une puissance de faisceau laser sur chaque point du matériau laminaire à traiter.

11. Système selon la revendication 9, dans lequel le dispositif de contrôle est configuré également :
pour détecter en temps réel par comparaison tout écart entre les paramètres d'émission réels détectés et les paramètres d'émission réglés par la vitesse à appliquer par chaque émetteur de faisceau laser en fonction de la vitesse actuelle de la bande de matériau laminaire,
lorsque des écarts au-dessus d'un seuil prédéfini sont détectés, pour calculer des paramètres d'émission réglés par l'écart, en tenant compte des paramètres d'émission réglés par la vitesse à appliquer par chaque émetteur de faisceau laser à la vitesse actuelle de la bande et des paramètres d'émission réels mesurés par le capteur de paramètre d'émission, pour corriger les écarts détectés produisant un traitement sans écarts ou avec des écarts dans le seuil prédéfini par rapport aux paramètres de traitement prédéfinis à obtenir ; et
pour appliquer immédiatement les paramètres d'émission réglés par l'écart à chaque émetteur de faisceau laser.

12. Système selon l'une quelconque des revendications précédentes 9 à 11, dans lequel le système comprend en outre au moins une caméra et une source de lumière faisant face à une région d'inspection du matériau laminaire placée en aval de la région cible de l'au moins un émetteur de faisceau laser, l'au moins une caméra étant connectée avec le dispositif de contrôle.
